# EUROPEAN PATENT SPECIFICATION

(11) **EP 3 098 541 B1**
(45) Date of publication and mention of the grant of the patent: **06.06.2018**
(21) Application number: 15754816.5
(22) Date of filing: 10.02.2015
(51) Int. Cl.: F25B 5/02, F24H 1/00, F25B 1/00, F25B 41/00, F24H 4/02, F25B 9/00, F24D 17/02, F25B 41/04, F25B 49/02, F25B 40/00

(54) **CO2 WATER HEATER**
CO2-WARMWASSERBEREITER
CHAUFFE-EAU À CO2

(30) Priority: 27.02.2014 JP 2014037563
(43) Date of publication of application: 30.11.2016
(73) Proprietor: Mayekawa Mfg. Co., Ltd., Koto-ku Tokyo 135-8482 (JP)
(72) Inventor: KATAOKA, Masaki, Tokyo 135-8482 (JP); ONO, Yuji, Tokyo 135-8482 (JP); YOKOYAMA, Takashi, Tokyo 135-8482 (JP); WATANABE, Hiroshi, Tokyo 135-8482 (JP)
(74) Representative: Regimbeau
(86) International application number: PCT/JP2015/053707
(87) International publication number: WO 2015/129456

(56) References cited:
- DE-A1-102006 054 828
- JP-A- 2006 125 769
- JP-A- 2007 303 807
- JP-A- 2009 133 543
- JP-A- 2010 012 949
- JP-A- 2010 236 725
- JP-A- 2010 281 552
- JP-A- 2011 169 584
- JP-A- 2011 521 194
- JP-A- 2012 037 203
- JP-A- 2014 020 766
- US-A1- 2006 218 948
- US-A1- 2011 041 523

## Description

### TECHNICAL FIELD

The present invention relates to a CO2 water heater constituting a heat pump cycle using CO2 as a heat exchange medium, more specifically to a CO2 water heater operable in operating modes including an air heat source mode and a water heat source mode which are switchable to each other.

### BACKGROUND

CO2 is a natural medium having a relatively small impact on the global environment. CO2 is non-toxic and non-flammable. In addition, when compressed to high pressure by a compressor, CO2 gets into the supercritical state (a state under a temperature and a pressure above the critical point, where distinct liquid and gas phases do not exist), in which CO2 is likely to transfer a high-temperature heat to e.g. water in nature. Thus, a water heater using CO2 as the heat exchange medium is capable of making water having a high temperature of about 90°C.

The present applicant has developed a CO2 water heater using discharged warm water from a plant as a heat source and CO2 as a heat exchange medium to form a heat pump cycle (Patent Document 1). It is possible to make water by using the water-heat-source CO2 water heater, and further it is possible to use cold water, which is secondarily generated, for cooling plant facilities or a cold water load.

Further, the present applicant has developed a CO2 water heater using air as a heat source (Patent Documents 2 and 3). The air-heat-source CO2 water heater is capable of making hot water at a high COP when discharged warm water is not available. US 2006/218948, US 2011/041523, and DE 10 2006 054828 disclose a cooling and/or heating system in which carbon dioxide may be used as refrigerant. US 2006/218948 discloses the preamble of claim 1.

### Citation List

### Patent Literature

Patent Document 1: JP 2010-281551 A
Patent Document 1: JP 2011-2207 A
Patent Document 1: JP 2012-177523 A

### SUMMARY

### Technical Problem

In some areas in Japan, cooling is necessary for only a few months in a year, and thus demand for water-heat-source CO2 water heaters is limited. Then, it may be considered that by using a water-heat-source CO2 water heater and an air-heat-source CO2 water heater in combination, the utilization rate may be increased. However, there may be a problem such that if an air-heat-source CO2 water heater is additionally provided, the electricity usage may increase.

In order to solve the problem, it is desired to develop a CO2 water heater capable of switching operation between water-heat-source operation and air-heat-source operation.

However, a water-heat-source CO2 water heater and an air-heat-source CO2 water heater are different in the amount of use of CO2. In addition, CO2 is used in a hot gas state. Thus, the capacities of CO2 used in the water-heat-source CO2 water heater and the air-heat-source CO2 water heater are largely different from each other. Therefore, it has been difficult to provide a CO2 water heater capable of switching operation between water-heat-source operation and air-heat-source operation.

In view of the above problem, it is an object of the present invention to provide a CO2 water heater capable of seamlessly switching between water-heat-source operation and air-heat-source operation.

### Solution to Problem

According to the present invention, a CO2 water heater as defined in the accompanying claims is provided.

A CO2 water heater according to an embodiment comprises: a CO2 circulation path configured to allow CO2 to circulate therein; a compressor, a gas cooler and an expansion valve, each of which is provided on the CO2 circulation path; a bypass passage connected to the CO2 circulation path and provided so as to bypass the expansion valve; and a CO2 reservoir tank for storing CO2 at least in a hot gas state, preferably in a supercritical state, and a first flow regulating valve, each of which is provided on the bypass passage.

The CO2 circulation path has two CO2 branch passages branched in a parallel manner between the compressor and a connecting portion of the bypass passage on a downstream side of the expansion valve.

The CO2 water heater further comprises: an air-heat-source heat exchanger provided on one of the CO2 branch passages; a water-heat-source heat exchanger provided on the other one of the CO2 branch passages; a flow path switching mechanism configured to switch a CO2 flow path to the one or the other one of the CO2 branch passages; and an air flow forming part for forming an air flow to be introduced to the air-heat-source heat exchanger.

In the above configuration, by switching the CO2 flow path between the CO2 branch passages by means of the flow path switching mechanism and supplying CO2 to the air-heat-source heat exchanger or the air-heat-source heat exchanger, it is possible to switch the operating mode of the CO2 water heater between a water heat source mode and an air heat source mode.

The capacity of the air-heat-source heat exchanger is set to be larger than the capacity of the water-heat-source heat exchanger because of e.g. the difference in the heat exchange efficiency with respect to the heat exchange medium between air and water, and thus, the CO2 circulation amount is set to be larger in the air heat source mode than in the water heat source mode. When the operating mode is switched, the difference in the CO2 circulation amount may be adjusted by adjusting the amount of CO2 stored in the CO2 reservoir tank.

It is thereby possible to seamlessly switch the operating mode without stopping operation of the CO2 water heater.

According to the above CO2 water heater, in a time period when cooling is necessary, by operating the CO2 water heater in the water heat source mode, it is possible to make warm water by using heat-source water such as discharged warm water from a plant, and to use cool water to be secondarily generated for cooling of plant facilities. In a time period, such as winter or night, when cooling is not necessary, it is possible to switch the operating mode to the air heat source mode to operate the CO2 water heater so as only to make warm water.

When operated in the water heat source mode, the CO2 water heater may be used as an alternative to a cold water chiller unit, and accordingly it is possible to largely reduce the operating time of the cold water chiller unit or to make the cold water chiller unit unnecessary.

Since the electric load is usually relatively small during the night, even if the CO2 water heater is operated in the air heat source mode in order to store hot water, the electricity usage may not exceed a certain amount.

Accordingly, it is possible to increase the operating rate of the CO2 water heater, and it is possible to flexibly switch the operating mode taking into consideration the cold or hot heat load or the electric power condition.

In an embodiment, the CO2 water heater further comprises an openable and closable shutoff valve on each of the CO2 branch passages at an outlet of the air-heat-source heat exchanger and the water-heat-source heat exchanger, respectively.

During operation in one operating mode, CO2 remaining in the heat exchanger provided on the other CO2 branch passage may be introduced into the CO2 circulation path.

In this regard, in the above CO2 water heater, the above shutoff valve provided, whereby it is possible to solve the problem. In addition, when the operating mode is switched from the air heat source mode to the water heat source mode, by permitting CO2 to remain in the air-heat-source heat exchanger, it is possible to smoothly switch the operating mode.

In an embodiment, the CO2 water heater further comprises: a first pressure sensor and a first temperature sensor, each of which is provided on the CO2 circulation path at an inlet of the compressor; a superheat degree calculating part configured to calculate a superheat degree of CO2 from detected values by the first pressure sensor and the first temperature sensor; and a first controller configured to control an opening degree of the first flow regulating valve on the basis of the superheat degree calculated by the superheat degree calculating part to control a superheat degree of CO2 to be introduced to the compressor.

When the operating mode is switched from the air heat source mode to the water heat source mode, the CO2 output pressure of the compressor may be likely to increase due to excess CO2 circulation amount. In order to avoid this, the opening degree of the expansion valve may be increased to an opening degree set at the switching, whereby it may be likely that CO2 as a liquid is introduced into the compressor.

In contrast, accordingly to the above configuration, by properly controlling the superheat degree of CO2 to be introduced into the compressor, it is possible to prevent liquid back of CO2. Excess CO2 obtained through this control may be stored in the CO2 reservoir tank.

In an embodiment, the CO2 water heater further comprises: a heat source water circulation path connected to the water-heat-source heat exchanger; a heat source water pump provided on the heat source water circulation path and configured to supply heat source water to the water-heat-source heat exchanger; a second pressure sensor provided on the CO2 branch passage at an inlet of the water-heat-source heat exchanger; and a second controller configured to allow the heat source water pump to operate when a CO2 saturation temperature corresponding to a detected value by the second pressure sensor becomes 0 degree or lower.

With the above configuration, by operating the heat source water pump when the CO2 saturation temperature corresponding to the pressure becomes 0 degree or lower, it is possible to prevent the heat source water from freezing in the water-heat-source heat exchanger.

In an embodiment, the CO2 water heater further comprises: a cooling water circulation path connected to the gas cooler; a heat exchanger which the cooling water circulation path and a secondary cooling water circulation path are connected to and which is configured to exchange heat between a cooling water circulating in the cooling water circulation path and a secondary cooling water circulating in the secondary cooling water circulation path; a second flow regulating valve provided on the secondary cooling water circulation path; a second temperature sensor provided on the cooling water circulation path at an outlet of the heat exchanger; a third temperature sensor provided on the secondary cooling water circulation path at the outlet of the heat exchanger; a third controller configured to control an opening degree of the second flow regulating valve, on the basis of detected values by the second temperature sensor and the third temperature sensor, so that a COP of the CO2 water heater becomes a setting value.

With the above configuration, it is possible to maintain the COP of the CO2 water heater at a relatively large set value.

In an embodiment, the CO2 water heater further comprises an auxiliary blower for forming a cold air flow between components of the CO2 water heater. When the CO2 water heater is not operated in the air heat source mode, the air flow forming part to form an air flow to be introduced to the air-heat-source heat exchanger is stopped, and accordingly the internal temperature of the CO2 water heater may gradually increase by the heat generated by the components of the CO2 water heater. By operating the auxiliary blower during operation in the water heat source mode, it is possible to decrease the internal temperature of the CO2 water heater.

### Advantageous Effects

According to the present invention, it is possible to seamlessly switch the operating mode of the CO2 water heater between the water heat source mode and the air heat source mode, thereby to improve the operating rate of the CO2 water heater and to suppress increase in the electricity usage.

### BRIEF DESCRIPTION OF DRAWINGS

Fig. 1 is a diagram illustrating a CO2 water heater according to a first embodiment of the present invention.
Fig. 2 is a block diagram illustrating a control system for the CO2 water heater.
Fig. 3 is a flowchart of an operation of switching the operating mode of the CO2 water heater.
Fig. 4 is a flowchart of an operation of equalizing a pressure of a water-heat-source heat exchanger of the CO2 water heater.
Fig. 5 is a flowchart of an operation of a cooling water circulation path of the CO2 water heater.
Fig. 6 is a block diagram related of a CO2 water heater according to a second embodiment of the present invention.

### DETAILED DESCRIPTION

Embodiments of the present invention will now be described in detail with reference to the accompanying drawings. It is intended, however, that unless particularly specified, dimensions, materials, shapes, relative positions and the like of components described in the embodiments shall be interpreted as illustrative only and not limitative of the scope of the present invention.

### (First embodiment)

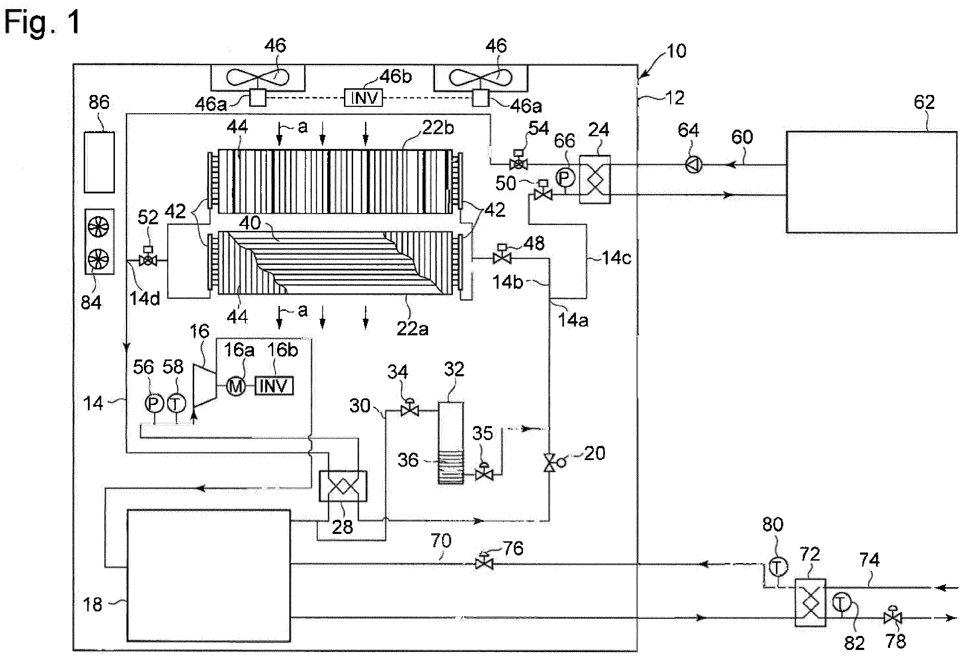

A CO2 water heater according to a first embodiment of the present invention will now be described with reference to Fig. 1 to Fig. 5. As illustrated in Fig. 1, a CO2 water heater 10 includes a housing 12 and a CO2 circulation path 14 provided in the housing 12, and on the CO2 circulation path 14, a compressor 16, a gas cooler 18, an expansion valve 20, an air-heat-source heat exchangers (22a, 22b), a water-heat-source heat exchanger 24 and so on are provided. The compressor 16 includes a driving motor 16a and an inverter 16b to enable a variable rotational speed of the driving motor 16a.

CO2 in the supercritical state is discharged from the compressor 16 to the CO2 circulation path 14, and then is sent to the gas cooler 18. A cooling water circulation path 70 is connected to the gas cooler 18, by which CO2 is cooled with cooling water circulating in the cooling water circulation path 70.

CO2 having passed through the gas cooler 18 is cooled by heat change in the internal heat exchanger 28 with CO2 having passed through the air-heat-source heat exchangers (22a, 22b) or the water-heat-source heat exchanger 24, and then is depressurized through the expansion valve 20. The CO2 circulation path 14 branches into CO2 branch passages 14b and 14c at a branching portion 14a on an outlet side of the expansion valve 20. The air-heat-source heat exchangers (22a, 22b) are provided on the CO2 branch passage 14b, and the water-heat-source heat exchanger 24 is provided on the CO2 branch passage 14c.

The CO2 branch passages (14b, 14c) join each other at a joining portion 14d on outlet sides of the air-heat-source heat exchangers (22a, 22b) and the water-heat-source heat exchanger 24. CO2 having joined at the joining portion 14d is heated in the internal heat exchanger 28 with CO2 from the gas cooler 18, and then is introduced into the inlet (not shown) of the compressor 16. COP of the CO2 water heater 10 may be increased because of the internal heat exchanger 28.

A bypass passage 30 is connected to the CO2 circulation path 14 between the gas cooler 18 and the internal heat exchanger 28 and between the expansion valve 20 and the branching portion 14a. A supercritical tank 32 for storing excess CO2 is provided on the bypass passage 30, and flow regulating valves (34, 35) are provided on the bypass passage 30 at an inlet and an outlet of the supercritical tank 32, respectively. The supercritical tank 32 has a heater 36. In the supercritical tank 32, the temperature and the pressure are maintained above the critical point of CO2, and CO2 stored in the supercritical tank 32 is maintained in the supercritical state.

The air-heat-source heat exchangers 22a and 22b have the same configuration. The air-heat-source heat exchangers (22a, 22b) have copper tubes 40 provided in a parallel manner with a space, and the both ends of the copper tubes 40 are connected to headers 42, respectively. Plate-like radiator fins 44 are provided on a surface of the cupper tubes, in a parallel manner along a direction perpendicular to the extending direction of the copper tubes 40. The headers 42 of the air-heat-source heat exchanger 22a and the headers 42 of the air-heat-source heat exchanger 22b are connected to the CO2 branch passage 14b in a parallel manner.

With the above configuration, CO2 flows from the CO2 branch passage 14b to the copper tubes 40 via the headers 42. Spaces are formed around the copper tubes 40, and an air flow is formed by a blower 46 provided on the housing 12. CO2 flowing in the copper tubes 40 receives heat of the air flow. The blower 46 has an inverter 46b which enables variable rotational speed of the driving motor 46a.

An electromagnetic valve 48 is provided on the CO2 branch passage 14b at inlets of the air-heat-source heat exchangers (22a, 22b), and an electromagnetic valve 50 is provided on the CO2 branch passage 14c at an inlet of the water-heat-source heat exchanger 24. An motor operated ball valve52 is provided on the CO2 branch passage 14b at outlets of the air-heat-source heat exchangers (22a, 22b), and an motor operated ball valve54 is provided on the CO2 branch passage 14c at an outlet of the water-heat-source heat exchanger 24. The motor operated ball valves (52, 54) are capable of completely shutting off the CO2 branch passage 14b or 14c when closed.

On the CO2 circulation path 14, a pressure sensor 56 and a temperature sensor 58 are provided at an inlet of the compressor 16.

A heat source water circulation path 60 is connected to the water-heat-source heat exchanger 24, and the other end of the heat source water circulation path 60 is connected to a heat source water tank 62. In the heat source water tank 62, heat source water such as discharged warm water from a plant is stored. The heat source water stored in the heat source water tank 62 is sent to the water-heat-source heat exchanger 24 by the heat source water pump 64 provide on the heat source water circulation path 60 and is cooled by heat exchange with CO2 in the water-heat-source heat exchanger 24. The cooled heat source water is sent back to the heat source water tank 62, and is used as a cold heat source for a cold water load. On the CO2 branch passage 14c, a pressure sensor 66 is provided at the inlet of the water-heat-source heat exchanger 24.

The cooling water circulation path 70 is connected to the gas cooler 18, and the other end of the cooling water circulation path 70 is connected to a heat exchanger 72. A secondary cooling water circulation path 74 is connected to the heat exchanger 72. A flow regulating valve 76 such as an motor operated valve is provided on the cooling water circulation path 70, and a flow regulating valve 78 having the same configuration as the flow regulating valve 76 is provided on the secondary cooling water circulation path 74. A temperature sensor 80 composed of e.g. a resistance temperature detector is provided on the cooling water circulation path 70 at an outlet of the heat exchanger, and a temperature sensor 82 having the same configuration as the temperature sensor 80 is provided on the secondary cooling water circulation path 74 at an outlet of the heat exchanger.

Cooling water circulating in the cooling water circulation path 70 is heated by the gas cooler 18 with CO2. The cooling water heated by the gas cooler 18 heats the secondary cooling water in the heat exchanger 72. The secondary cooling water heated by the heat exchanger 72 is used as heat source water for other uses.

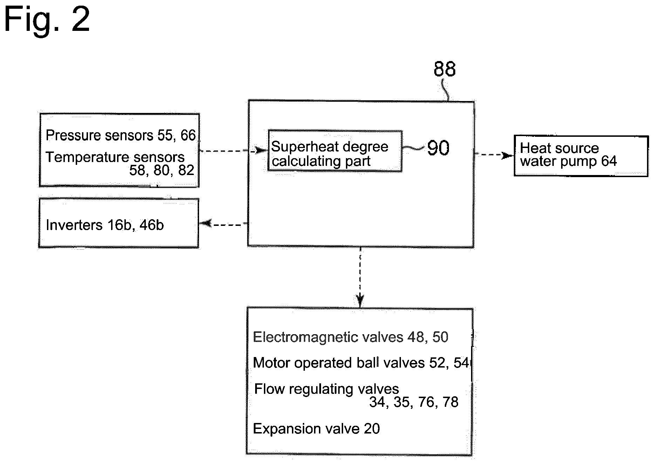

On the housing 12, an auxiliary ventilation fan 84 and a control panel 86 having a built-in control device 88 (see Fig. 2) for controlling operation of the CO2 water heater are provided. The ventilation fan 84 enables ventilation in the housing 12. During operation in the water heat source mode, the blower 46 is not operated. Accordingly, the temperature in the housing 12 may be increased by a heat released by the components. In view of this, the ventilation fan 84 may be operated during operation in the water heat source mode to have the internal space of the housing ventilated thereby to prevent temperature increase.

A control system for the CO2 water heater 10 will now be described with reference to Fig. 2. As illustrated in Fig. 2, detected values by the pressure sensors (55, 66) and temperature sensors (58, 80, 82) are inputted to the control device 88. Based on these detected values, the control device 88 controls operation of the inverters (16b, 46b) and the heat source water pump 64, and controls opening degrees of the expansion valve 20, the electromagnetic valves (48, 50), the flow regulating valves (34, 35, 76, 78) and the motor operated ball valves (52, 54).

With the above configuration, during operation in the air heat source mode, by the control device 88, the electromagnetic valve 48 and the motor operated ball valve 52 are opened and the electromagnetic valve 50 and the motor operated ball valve 54 are closed, and the blower 46 is started to operate, and an air flow flowing on the surface of the copper tubes 40 of the air-heat-source heat exchangers (22a, 22b) is thereby formed.

CO2 having passed through the expansion valve 20 and thus having a reduced pressure absorbs heat for its evaporative latent heat from an air flow a in the air-heat-source heat exchangers (22a, 22b).

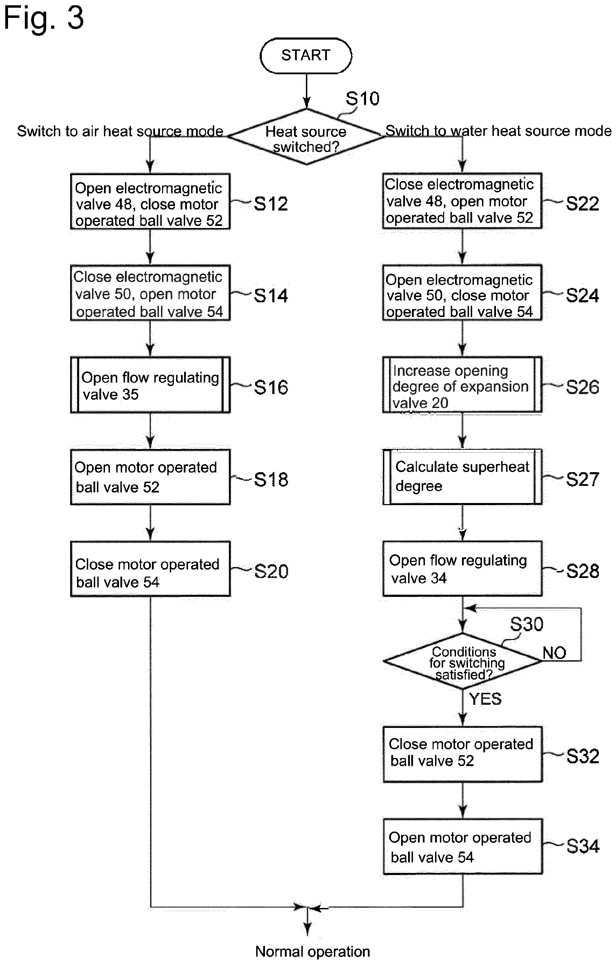

Fig. 3 is a flowchart of an operation of switching the operating mode of the CO2 water heater 10 to an air heat source mode or a water heat source mode.

When the operating mode is switched to the air heat source mode, operation steps S12 to S20 are carried out. In order to secure a heat exchange amount between CO2 and the air flow a, the copper tubes 40 of the air-heat-source heat exchangers (22a, 22b) are formed to have a large capacity so that the CO2 circulation amount in the CO2 circulation path is larger than in the case of operation in the water heat source mode. For that purpose, the flow regulating valve 35 is opened so as to provide a suitable CO2 circulation amount for operation in the air heat source mode (S16).

When the operating mode is switched to the water heat source mode, operation steps S22 to S34 are carried out. When the operating mode is switched from the air heat source mode to the water heat source mode, CO2 circulation amount becomes excessive so that the CO2 output pressure of the compressor is likely to increase. In view of this, the opening degree of the expansion valve 20 is increased to its set opening degree to suppress increase in the output pressure of the compressor (S26).

Since CO2 thereby becomes likely to be introduced into the compressor 16 in the liquid state, it is necessary to open the flow regulating valve 34 to store excess CO2 in the supercritical tank 32.

In view of this, the control device 88 has a superheat degree calculating part 90 which obtains, from a detected value by the pressure sensor 56, CO2 saturation temperature corresponding to the detected value, and which calculates a superheat degree of CO2 to be introduced into the compressor 16 from a difference between the obtained saturation temperature and a detected value by the temperature sensor 58 (S27). On the basis of the calculated superheat degree, a CO2 amount to be stored in the supercritical tank 32 to provide an appropriate superheat degree to suppress liquid back, and the flow regulating valve 34 is opened to store excessive CO2 in the supercritical tank 32 (S28).

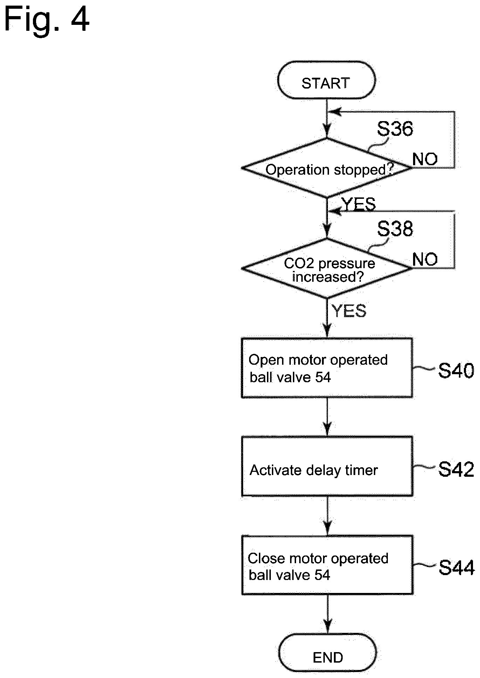

Fig. 4 is a flowchart of an operation of equalizing a pressure to prevent pressure increase of CO2 in the water-heat-source heat exchanger 24 when it is stopped. As shown in Fig. 4, in a case of e.g. operation in the air heat source mode, when the water-heat-source heat exchanger 24 is stopped (S36), if a CO2 pressure in the water-heat-source heat exchanger 24 is relatively high (S38), the motor operated ball valve 54 is opened to decrease the CO2 pressure (S40). Then a delay timer is activated (S42), and after a lapse of a set period of time after the opening of the motor operated ball valve 54, the motor operated ball valve 54 is closed (S44).

When the water-heat-source heat exchanger 24 is stopped and the CO2 pressure in the water-heat-source heat exchanger 24 is detected with the pressure sensor 66, if the CO2 saturation temperature corresponding to the detected value becomes 0°C or lower, the heat source water pump 64 is started to operate by the control device 88 to prevent the heat source water in the water-heat-source heat exchanger 24 from freezing.

CO2 having received heat from the air flow a in the air-heat-source heat exchangers (22a, 22b) to have an increased potential heat is cooled by the gas cooler 18 with cooling water circulating in the cooling water circulation path 70. The detected values by the temperature sensors (80, 82) are inputted to the control device 88, and the control device 88 controls the opening degrees of the flow regulating valves (76, 78) so that the cooling water circulating in the cooling water circulation path 70 and the secondary cooling water circulating in the secondary cooling water circulation path 74 have desired temperatures, respectively.

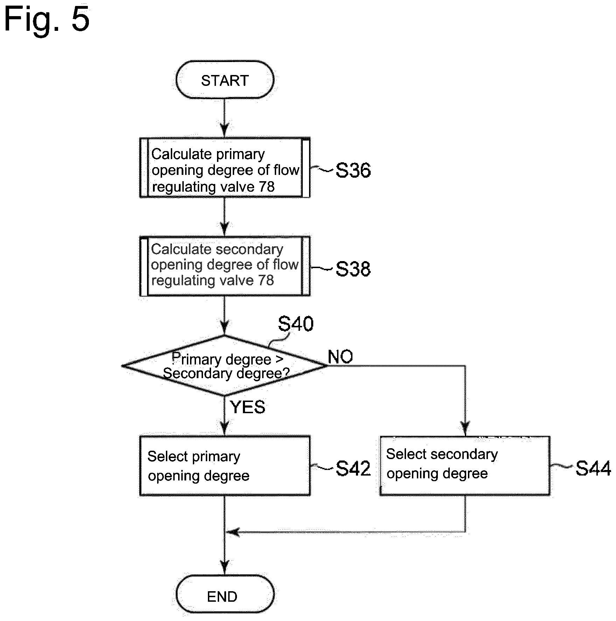

Fig. 5 is a flowchart of an operation of the flow regulating valves (76, 78) by the control device 88. In the operation shown in Fig. 5, the flow regulating valve 76 is preliminarily maintained at a set opening degree with which a high COP is obtainable. Firstly, by using a set temperature of the cooling water circulating in the cooling water circulation path 70 as a reference, an opening degree of the flow regulating valve 78 with which COP of the CO2 water heater 10 becomes higher is obtained through PID calculation (primary opening degree calculation: S36).

Next, by using a set temperature of the secondary cooling water circulating in the secondary cooling water circulation path 74 as a reference, an opening degree of the flow regulating valve 78 with which COP of the CO2 water heater 10 becomes higher is obtained through PID calculation (secondary opening degree calculation: S38). Then, the primary opening degree and the secondary opening degree are compared with each other (S40), and the larger one of the two is selected (S42 and S44).

Through the above operation, it is possible to increase the flow rate of the secondary cooling water while maintaining a high COP of the CO2 water heater 10.

With the above embodiment, by means of the control device 88, it is possible to seamlessly switch the operating mode to the air heat source mode or the water heat source mode without stopping the operation of the CO2 water heater 10. Accordingly, in a time period when cooling is needed, the CO2 water heater may be operated in the water heat source mode to obtain cold water which may be used for e.g. cooling of a plant facility, and in a time period when cooling is not needed such as winter or night, the operating mode may be switched to the air heat source mode to obtain warm water, whereby it is possible to improve the operating rate of the CO2 water heater 10.

Since one CO2 water heater 10 may be operated in the two operating modes, increase in the electricity usage may be suppressed. Further, since it is possible to flexibly switch the operating modes taking into consideration the cold or hot heat load or the electric power condition, the CO2 water heater 10 may be easily introduced to an existing facility.

The difference in the CO2 circulation amount between the air heat source mode and the water heat source mode may be adjusted by adjusting the amount of CO2 stored in the supercritical tank 32.

Since the motor operated ball valves (52, 54) capable of shutting off CO2 flow path are provided at the outlets of the air-heat-source heat exchangers (22a, 22b) and the water-heat-source heat exchanger 24, CO2 existing in the heat exchangers may not be introduced into the CO2 circulation path 14 when the heat exchangers are stopped. For example, CO2 remaining in the air-heat-source heat exchangers (22a, 22b) during operation in the water heat source mode may be condensed, depending on the outside air temperature. In view of this, by shutting off the outlets of the air-heat-source heat exchangers (22a, 22b) with the motor operated ball valve 52, it is possible to prevent condensed CO2 from being introduced into the CO2 circulation path 14.

Since the motor operated ball valve 52 is provided, by storing CO2 in the air-heat-source heat exchangers (22a, 22b) having a relatively large capacity during operation in the water heat source mode, it is possible to rapidly remove excess CO2 from the CO2 circulation path 14, whereby it is possible to rapidly switch the operating mode from the air heat source mode to the water heat source mode.

By providing the pressure sensor 56 and the temperature sensor 58 at the inlet of the compressor 16, calculating the CO2 superheat degree from the detected values by the above sensors by the superheat degree calculating part 90, and adjusting the stored amount of CO2 in the supercritical tank 32 so that the superheat degree becomes an appropriate value, it is possible to prevent CO2 in the liquid state from flowing into the compressor 16.

Further, by starting the heat source water pump 64 to operate when the saturation temperature corresponding to the detected value by the pressure sensor 66 becomes 0°C or lower, it is possible to prevent the heat source water in the water-heat-source heat exchanger 24 from freezing.

By calculating the opening degrees of the flow regulating valve 78 with which a higher COP of the CO2 water heater may be obtained are calculated through PID calculation on the basis of the temperature of the cooling water circulating in the cooling water circulation path 70 and the temperature of the secondary cooling water flowing in the secondary cooling water circulation path 74, respectively, and selecting the larger opening degree between the two calculated opening degrees, it is possible to increase the flow rate of the secondary cooling water while maintaining a high COP of the CO2 water heater.

Further, also in the water heat source mode where the blower 46 is stopped, by operating the auxiliary ventilation fan 84, it is possible to prevent temperature increase in the housing 12 due to heat generation by the components of the CO2 water heater.

### (Second embodiment)

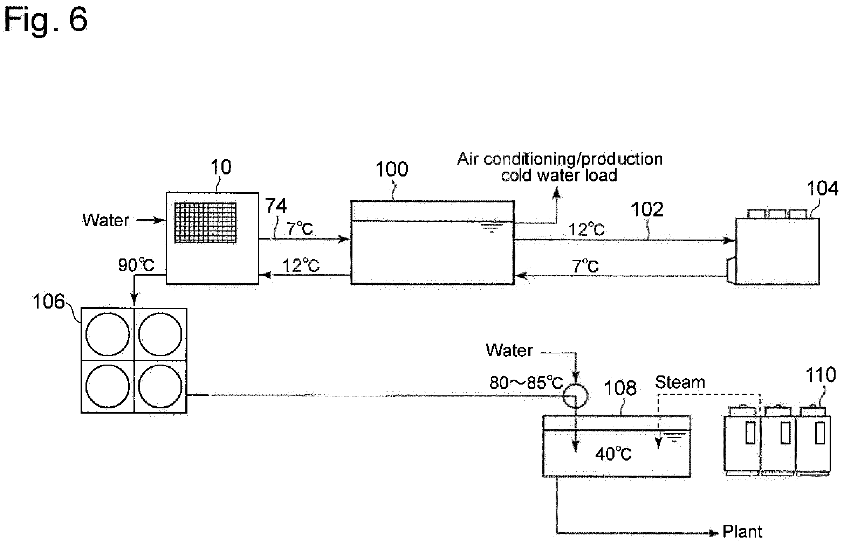

A second embodiment of the present invention will now be described with reference to Fig. 6. As illustrated in Fig. 6, a CO2 water heater 10 and a cold water tank 100 are connected to each other via a secondary cooling water circulation path 74. Secondary cooling water generated by the CO2 water heater 10 is stored in the cold water tank 100. The secondary cooling water stored in the cold water tank 100 may be used for air conditioning or for a cold load of a production facility.

A part of the secondary cooling water used for a cold water load to have an increased temperature is sent to a cold water chiller 104 via a tertiary cooling water circulation path 102. The secondary cooling water sent to the cold water chiller 104 is cooled by the chiller 104, and then is sent back to the cold water tank 100.

A heat source water having a temperature increased to about 90°C by a water-heat-source heat exchanger 24 of the CO2 water heater is sent to a hot-water supply tank 106. The warm water stored in the hot-water supply tank 106 is sent to a washing warm water tank 108 and then is supplied as washing warm water to e.g. a plant facility.

When a steam boiler 110 is provided together as shown in the drawing, the washing warn water stored in the washing warm water tank 108 may be maintained warm with excess steam generated by the steam boiler 110.

According to the above embodiment, since the CO2 water heater 10 may be used as an alternative to the cold water chiller 104 during operation in the water heat source mode, it is possible to largely reduce the operating time of the cold water chiller 104 or to make the cold water chiller 104 unnecessary. Further, according to the above embodiment, it is possible to utilize the generated warm water as washing warm water for a plant facility.

### Industrial Applicability

According to the present invention, it is possible to provide a CO2 water heater which is capable of seamlessly switching operating mode between operation with a water heat source and operation with an air heat source.

### Reference Signs List

- 10: CO2 water heater
- 12: Housing
- 14: CO2 circulation path
- 14b, 14c: CO2 branch passage
- 16: Compressor
- 16a: Driving motor
- 16b: Inverter
- 18: Gas cooler
- 20: Expansion valve
- 22a, 22b: Air-heat-source heat exchange
- 24: Water-heat-source heat exchanger
- 28: Internal heat exchanger
- 30: Bypass passage
- 32: Supercritical tank (CO2 reservoir tank)
- 34, 35: Flow regulating valve (First flow regulating valve)
- 36: Heater
- 40: Copper tubes
- 42: Header
- 44: Radiator fins
- 46: Blower (Air flow forming part)
- 46a: Driving motor
- 46b: Inverter
- 48, 50: Electromagnetic valve (Flow path switching mechanism)
- 52, 54: Motor operated ball valve (Shutoff valve)
- 56: Pressure sensor (First pressure sensor)
- 58: Temperature sensor (First temperature sensor)
- 60: Heat source water circulation path
- 62: Heat source water tank
- 64: Heat source water pump
- 66: Pressure sensor (Second pressure sensor)
- 70: Cooling water circulation path
- 72: Heat exchanger
- 74: Secondary cooling water circulation path
- 76: Flow regulating valve
- 78: Flow regulating valve (Second flow regulating valve)
- 80: Temperature sensor (Second temperature sensor)
- 82: Temperature sensor (Third temperature sensor)
- 84: Ventilation fan (Auxiliary blower)
- 86: Control panel
- 88: Control device
- 90: Superheat degree calculating part
- 100: Cold water tank
- 102: Tertiary cooling water circulation path
- 104: Cold water chiller
- 106: Hot-water supply tank
- 108: Washing warm water tank
- 110: Steam boiler
- a: Air flow

## Claims

1. A CO2 water heater (10) comprising:
a CO2 circulation path (14) configured to allow CO2 to circulate therein and having two CO2 branch passages (14b, 14c);
a compressor (16), a gas cooler (18) and an expansion valve (20), each of which is provided on the CO2 circulation path (14);
a CO2 reservoir tank (32) for storing CO2 at least in a hot gas state and a first flow regulating valve (34, 35);
an air-heat-source heat exchanger (22a, 22b) provided on one (14b) of the CO2 branch passages (14b, 14c);
a water-heat-source heat exchanger (24) provided on the other one (14c) of the CO2 branch passages (14b, 14c);
a flow path switching mechanism (48, 50) configured to switch a CO2 flow path to the one (14b) or the other one (14c) of the CO2 branch passages (14b, 14c); and
an air flow forming part (46) for forming an air flow (a) to be introduced to the air-heat-source heat exchanger (22a, 22b),
**characterized by** further comprising a bypass passage (30) connected to the CO2 circulation path (14) and provided so as to bypass the expansion valve (20),
the CO2 reservoir tank (32) and the first flow regulating valve (34, 35) being provided on the bypass passage (30),
the CO2 branch passages (14b, 14c) being branched in a parallel manner between the compressor (16) and a connecting portion of the bypass passage (30) on a downstream side of the expansion valve (20).

2. The CO2 water heater (10) according to claim 1, further comprising an openable and closable shutoff valve (52, 54) on each of the CO2 branch passages (14b, 14c) at an outlet of the air-heat-source heat exchanger (22a, 22b) and the water-heat-source heat exchanger (24), respectively.

3. The CO2 water heater (10) according to claim 1, further comprising:
a first pressure sensor (56) and a first temperature sensor (58), each of which is provided on the CO2 circulation path (14) at an inlet of the compressor (16);
a superheat degree calculating part (90) configured to calculate a superheat degree of CO2 from detected values by the first pressure sensor (56) and the first temperature sensor (58); and
a first controller configured to control an opening degree of the first flow regulating valve (34, 35) on the basis of the superheat degree calculated by the superheat degree calculating part (90) to control a superheat degree of CO2 to be introduced to the compressor (16).

4. The CO2 water heater (10) according to claim 1, further comprising:
a heat source water circulation path (60) connected to the water-heat-source heat exchanger (24);
a heat source water pump (64) provided on the heat source water circulation path (60) and configured to supply heat source water to the water-heat-source heat exchanger (24);
a second pressure sensor (66) provided on the CO2 branch passage (14c) at an inlet of the water-heat-source heat exchanger (24); and
a second controller configured to allow the heat source water pump (64) to operate when a CO2 saturation temperature corresponding to a detected value by the second pressure sensor (66) becomes 0 degree or lower.

5. The CO2 water heater (10) according to claim 1, further comprising:
a cooling water circulation path (70) connected to the gas cooler (18);
a heat exchanger (72) which the cooling water circulation path (70) and a secondary cooling water circulation path (74) are connected to and which is configured to exchange heat between a cooling water circulating in the cooling water circulation path (70) and a secondary cooling water circulating in the secondary cooling water circulation path (74);
a second flow regulating valve (78) provided on the secondary cooling water circulation path (74);
a second temperature sensor (80) provided on the cooling water circulation path (70) at an outlet of the heat exchanger (72);
a third temperature sensor (82) provided on the secondary cooling water circulation path (74) at the outlet of the heat exchanger (72);
a third controller configured to control an opening degree of the second flow regulating valve (78), on the basis of detected values by the second temperature sensor (80) and the third temperature sensor (82), so that a COP of the CO2 water heater becomes a setting value.

6. The CO2 water heater (10) according to claim 1, further comprising an auxiliary blower (84) for forming a cold air flow between components of the CO2 water heater (10).

7. The CO2 water heater (10) according to claim 1,
wherein the CO2 reservoir tank (32) is configured such that an amount of CO2 stored therein is adjusted when the CO2 flow path is switched by the flow path switching mechanism (48, 50) to adjust a difference in a CO2 circulation amount between an air heat source mode where the air-heat-source heat exchanger (22a, 22b) is in operation and a water heat source mode where the water-heat-source heat exchanger (24) is in operation.

## Patentansprüche

1. CO2-Warmwasserbereiter (10), aufweisend:
einen CO2-Umlaufpfad (14), der konfiguriert ist, um einen Umlauf von CO2 darin zu gestatten, und der zwei CO2-Zweigkanäle (14b, 14c) aufweist;
einen Kompressor (16), einen Gaskühler (18) und ein Expansionsventil (20), jeweils bereitgestellt auf dem CO2-Umlaufpfad (14);
einen CO2-Speichertank (32), zum Speichern von CO2 zumindest in einem Heißgaszustand, und ein erstes Stromregelventil (34, 35);
einen Luft-Wärmequellen-Wärmetauscher (22a, 22b), der an einem (14b) der CO2-Zweigkanäle (14b, 14c) bereitgestellt ist;
einen Wasser-Wärmequellen-Wärmetauscher (24), der an dem anderen (14c) der CO2-Zweigkanäle (14b, 14c) bereitgestellt ist;
einen Strömungspfad-Umschaltmechanismus (48, 50), der konfiguriert ist zum Zuschalten eines CO2 Strömungspfads zu dem einen (14b) oder dem anderen (14c) der CO2-Zweigkanäle (14b, 14c); und
einen Luftstrombildungsteil (46) zum Bilden eines Luftstroms (a), der in den Luft-Wärmequellen-Wärmetauscher (22a, 22b) einzuführen ist,
**dadurch gekennzeichnet, dass** es ferner einen Bypass-Kanal (30) aufweist, der mit dem CO2-Umlaufpfad (14) verbunden und zum Umgehen des Expansionsventils (20) bereitgestellt ist,
der CO2-Speichertank (32) und das erste Stromregelventil (34, 35) auf dem Bypass-Kanal (30) bereitgestellt sind,
die CO2-Zweigkanäle (14b, 14c) parallel zwischen dem Kompressor (16) und einem Verbindungsabschnitt des Bypass-Kanals (30) auf einer stromabwärtigen Seite des Expansionsventils (20) verzweigt sind.

2. CO2-Warmwasserbereiter (10) nach Anspruch 1, ferner aufweisend ein öffenbares und schließbares Absperrventil (52, 54) an jedem der CO2 Zweigkanäle (14b, 14c) jeweils an einem Auslass des Luft-Wärmequellen-Wärmetauschers (22a, 22b) und des Wasser-Wärmequellen-Wärmetauschers (24).

3. CO2-Warmwasserbereiter (10) nach Anspruch 1, ferner aufweisend:
einen ersten Drucksensor (56) und einen ersten Temperatursensor (58), die jeweils im CO2 Umlaufpfad (14) an einem Einlass des Kompressors (16) bereitgestellt sind;
einen Überhitzungsgrad-Berechnungsteil (90), konfiguriert zum Berechnen eines Überhitzungsgrades von CO2 aus vom ersten Drucksensor (56) und dem ersten Temperatursensor (58) erfassten Werten; und
eine erste Steuervorrichtung, konfiguriert zum Steuern eines Öffnungsgrades des ersten Stromregelventils (34, 35) auf Basis des durch den Überhitzungsgrad-Berechnungsteil (90) berechneten Überhitzungsgrades, um einen Überhitzungsgrad von CO2 zu steuern, der in den Kompressor (16) einzuleiten ist.

4. CO2-Warmwasserbereiter (10) nach Anspruch 1, ferner aufweisend:
einen Wärmequellen-Wasser-Umlaufpfad (60), verbunden mit dem Wasser-Wärmequellen-Wärmetauscher (24) ;
eine Wärmequellen-Wasserpumpe (64), bereitgestellt im Wärmequellen-Wasser-Umlaufpfad (60) und konfiguriert für Zuführen von Wärmequellen-Wasser zum Wasser-Wärmequellen-Wärmetauscher (24);
einen zweiten Drucksensor (66), der im CO2 Umlaufpfad (14c) an einem Einlass des Wasser Wärmequellen-Wärmetauschers (24) bereitgestellt ist; und
eine zweite Steuervorrichtung, konfiguriert zum Ermöglichen eines Betriebs der Wärmequellen-Wasserpumpe (64), wenn eine einem durch den zweiten Drucksensor (66) erfassten Wert entsprechende CO2-Sättigungstemperatur 0 Grad oder weniger wird.

5. CO2-Warmwasserbereiter (10) nach Anspruch 1, ferner aufweisend:
einen Kühlwasser-Umlaufpfad (70), verbunden mit dem Gaskühler (18);
einen Wärmetauscher (72), verbunden mit dem der Kühlwasser-Umlaufpfad (70) und einem sekundären Kühlwasser-Umlaufpfad (74), und konfiguriert für Wärmeaustausch zwischen einem im Kühlwasser Umlaufpfad (70) umlaufenden Kühlwasser und einem zweiten im sekundären Kühlwasser-Umlaufpfad (74) umlaufenden Kühlwasser;
ein zweites Stromregelventil (78), bereitgestellt im sekundären Kühlwasser Umlaufpfad (74);
einen zweiten Temperatursensor (80), bereitgestellt im Kühlwasser-Umlaufpfad (70) an einem Auslass des Wärmetauschers (72);
einen dritten Temperatursensor (82), bereitgestellt im sekundären Kühlwasser-Umlaufpfad (74) am Auslass des Wärmetauschers (72);
eine dritte Steuervorrichtung, konfiguriert zum Steuern eines Öffnungsgrades des zweiten Strömungsregelventils (78) auf Basis der durch den zweiten Temperatursensor (80) und den dritten Temperatursensor (82) erfassten Werte, so dass ein COP des CO2-Warmwasserbereiters ein Einstellwert wird.

6. CO2-Warmwasserbereiter (10) nach Anspruch 1, ferner aufweisend ein Hilfsgebläse (84) zum Bilden eines Kaltluftstroms zwischen Komponenten des CO2 Warmwasserbereiters (10).

7. CO2-Warmwasserbereiter (10) nach Anspruch 1,
wobei der CO2-Speichertank (32) so konfiguriert ist, dass eine Menge darin gespeichertes CO2 angepasst wird, wenn der CO2-Umlaufpfad durch den Strömungspfad-Umschaltmechanismus (48, 50) umgeschaltet wird, um eine Differenz einer CO2-Umlaufmenge zwischen einem Luft-Wärmequellen-Modus, wo der Luft-Wärmequellen-Wärmetauscher (22a, 22b) in Betrieb ist, und einem Wasser-Wärmequellen-Modus, wo der Wasser-Wärmequellen-Wärmetauscher (24) in Betrieb ist, einzustellen.

## Revendications

1. Chauffe-eau au CO2 (10) comprenant :
un trajet de circulation de CO2 (14) configuré pour permettre au CO2 de circuler dans celui-ci et comportant deux passages de branchement de CO2 (14b, 14c) ;
un compresseur (16), un dispositif de refroidissement de gaz (18) et une vanne de détente (20), chacun d'eux étant prévu sur le trajet de circulation de CO2 (14) ;
une cuve de réservoir de CO2 (32) pour stocker le CO2 au moins dans un état gazeux chaud et une première vanne de régulation d'écoulement (34, 35) ;
un échangeur de chaleur de source de chaleur d'air (22a, 22b) prévu sur l'un (14b) des passages de branchement de CO2 (14b, 14c) ;
un échangeur de chaleur de source de chaleur d'eau (24) prévu sur l'autre (14c) des passages de branchement de CO2 (14b, 14c) ;
un mécanisme de commutation de trajet d'écoulement (48, 50) configuré pour commuter un trajet d'écoulement de CO2 vers l'un (14b) ou l'autre (14c) des passages de branchement de CO2 (14b, 14c) ; et
une partie de formation d'écoulement d'air (46) pour former un écoulement d'air (a) à introduire dans l'échangeur de chaleur de source de chaleur d'air (22a, 22b),
**caractérisé en ce qu'**il comprend en outre un passage de dérivation (30) relié au trajet de circulation de CO2 (14) et prévu de manière à shunter la vanne de détente (20),
la cuve de réservoir de CO2 (32) et la première vanne de régulation d'écoulement (34, 35) étant prévues sur le passage de dérivation (30),
les passages de branchement de CO2 (14b, 14c) étant branchés en parallèle entre le compresseur (16) et une partie de raccordement du passage de dérivation (30) d'un côté aval de la vanne de détente (20).

2. Chauffe-eau au CO2 (10) selon la revendication 1, comprenant en outre une vanne de coupure pouvant être ouverte et fermée (52, 54) sur chacun des passages de branchement de CO2 (14b, 14c) au niveau d'un orifice de sortie de l'échangeur de chaleur de source de chaleur d'air (22a, 22b) et de l'échangeur de chaleur de source de chaleur d'eau (24), respectivement.

3. Chauffe-eau au CO2 (10) selon la revendication 1, comprenant en outre :
un premier capteur de pression (56) et un premier capteur de température (58), chacun d'eux étant prévu sur le trajet de circulation de CO2 (14) au niveau d'un orifice d'entrée du compresseur (16) ;
une partie de calcul de degré de surchauffe (90) configurée pour calculer un degré de surchauffe de CO2 à partir des valeurs détectées par le premier capteur de pression (56) et par le premier capteur de température (58) ; et
un premier contrôleur configuré pour commander un degré d'ouverture de la première vanne de régulation d'écoulement (34, 35) sur la base du degré de surchauffe calculé par la partie de calcul de degré de surchauffe (90) pour commander un degré de surchauffe du CO2 à introduire dans le compresseur (16).

4. Chauffe-eau au CO2 (10) selon la revendication 1, comprenant en outre :
un trajet de circulation d'eau de source de chaleur (60) relié à l'échangeur de chaleur de source de chaleur d'eau (24) ;
une pompe à eau de source de chaleur (64) prévue sur le trajet de circulation d'eau de source de chaleur (60) et configurée pour fournir l'eau de source de chaleur à l'échangeur de chaleur de source de chaleur d'eau (24) ;
un deuxième capteur de pression (66) prévu sur le passage de branchement de CO2 (14c) au niveau d'un orifice d'entrée de l'échangeur de chaleur de source de chaleur d'eau (24) ; et
un deuxième contrôleur configuré pour permettre à la pompe à eau de source de chaleur (64) de fonctionner lorsqu'une température de saturation de CO2 correspondant à une valeur détectée par le deuxième capteur de pression (66) devient égale à 0 degré ou moins.

5. Chauffe-eau au CO2 (10) selon la revendication 1, comprenant en outre :
un trajet de circulation d'eau de refroidissement (70) relié au dispositif de refroidissement de gaz (18) ;
un échangeur de chaleur (72) auquel le trajet de circulation d'eau de refroidissement (70) et un trajet de circulation d'eau de refroidissement secondaire (74) sont reliés et qui est configuré pour échanger la chaleur entre une eau de refroidissement circulant dans le trajet de circulation d'eau de refroidissement (70) et une eau de refroidissement secondaire circulant dans le trajet de circulation d'eau de refroidissement secondaire (74) ;
une deuxième vanne de régulation d'écoulement (78) prévue sur le trajet de circulation d'eau de refroidissement secondaire (74) ;
un deuxième capteur de température (80) prévu sur le trajet de circulation d'eau de refroidissement (70) au niveau d'un orifice de sortie de l'échangeur de chaleur (72) ;
un troisième capteur de température (82) prévu sur le trajet de circulation d'eau de refroidissement secondaire (74) au niveau de l'orifice de sortie de l'échangeur de chaleur (72) ;
un troisième contrôleur configuré pour commander un degré d'ouverture de la deuxième vanne de régulation d'écoulement (78), sur la base des valeurs détectées par le deuxième capteur de température (80) et le troisième capteur de température (82), de sorte qu'un COP du chauffe-eau au CO2 devienne une valeur de réglage.

6. Chauffe-eau au CO2 (10) selon la revendication 1, comprenant en outre un ventilateur auxiliaire (84) pour former un écoulement d'air froid entre les composants du chauffe-eau au CO2 (10).

7. Chauffe-eau au CO2 (10) selon la revendication 1,
dans lequel la cuve de réservoir de CO2 (32) est configurée de sorte qu'une quantité de CO2 stockée dans celle-ci soit ajustée lorsque le trajet d'écoulement de CO2 est commuté par le mécanisme de commutation de trajet d'écoulement (48, 50) pour ajuster une différence d'une quantité de circulation de CO2 entre un mode de source de chaleur d'air où l'échangeur de chaleur de source de chaleur d'air (22a, 22b) est en fonctionnement et un mode de source de chaleur d'eau où l'échangeur de chaleur de source de chaleur d'eau (24) est en fonctionnement.
